# EUROPÄISCHE PATENTSCHRIFT

(11) **EP 1 743 812 B1**
(45) Veröffentlichungstag und Bekanntmachung des Hinweises auf die Patenterteilung: **28.05.2008**
(21) Anmeldenummer: 06017727.6
(22) Anmeldetag: 03.07.2002
(51) Int. Cl.: B60R 21/34

(54) **Fahrzeugkarosserie mit einer nachgiebig gelagerten Fronthaube**
Vehicle body comprising an elastically mounted bonnet
Carrosserie de véhicule comprenant un capot monté pour pouvoir être déformé

(30) Priorität: 05.07.2001 DE 10132656
(43) Veröffentlichungstag der Anmeldung: 17.01.2007
(62) Teilanmeldung aus: 02754308.1
(73) Patentinhaber: Adam Opel GmbH, 65423 Rüsselsheim (DE)
(72) Erfinder: Bittmann, Werner, 65428 Rüsselsheim (DE); Schmitz, Alois, 55129 Mainz (DE)
(74) Vertreter: Strauss, Peter

(56) Entgegenhaltungen:
- EP-A- 1 104 728
- WO-A-00/72101
- PATENT ABSTRACTS OF JAPAN Bd. 1995, Nr. 03, 28. April 1995 (1995-04-28) -& JP 06 336179 A (MITSUBISHI MOTORS CORP), 6. Dezember 1994 (1994-12-06)
- PATENT ABSTRACTS OF JAPAN Bd. 1999, Nr. 04, 30. April 1999 (1999-04-30) -& JP 11 020740 A (NISSAN MOTOR CO LTD), 26. Januar 1999 (1999-01-26)
- PATENT ABSTRACTS OF JAPAN Bd. 2000, Nr. 01, 31. Januar 2000 (2000-01-31) -& JP 11 291948 A (HONDA MOTOR CO LTD), 26. Oktober 1999 (1999-10-26)
- PATENT ABSTRACTS OF JAPAN Bd. 008, Nr. 061 (M-284), 23. März 1984 (1984-03-23) -& JP 58 211975 A (NISSAN JIDOSHA KK), 9. Dezember 1983 (1983-12-09)

## Beschreibung

Die Erfindung bezieht sich auf eine Fahrzeugkarosserie mit einer nachgiebig gelagerten Fronthaube, mit jeweils einem Scharnier zwischen der Fahrzeugkarosserie und einem Seitenrand der Fronthaube, damit diese um eine von den Scharnieren definierte Schwenkachse aufgeklappt werden kann, und mit mindestens einer unter Belastung nachgiebigen Baueinheit an jedem Seitenrand zum Lagern der Fronthaube an der Fahrzeugkarosserie sowie den weiteren Merkmalen des Oberbegriffs des Anspruches 1.

Eine Fahrzeugkarosserie mit einer nachgiebig gelagerten Fronthaube ist in der DE 27 11 339 A1 beschrieben. Der dort vorgeschlagenen Lagerung der Fronthaube liegt folgende Überlegung zu Grunde: Es passieren immer wieder Unfälle, bei denen ein Fahrzeug einen die Straße querenden Fußgänger frontal erfasst. Der Körper und der Kopf des Fußgängers schlagen dadurch auf die Fronthaube, wodurch schwere Verletzungen hervorgerufen werden. Deshalb gehen die Bemühungen der Fahrzeughersteller dahin, die Fahrzeugkarosserie und insbesondere den Vorderbau mit der Fronthaube so zu gestalten, dass eine Verletzung zwar nicht ausgeschlossen, wohl aber die Verletzungsschwere gemildert wird. Um insbesondere schwere Kopfverletzungen zu vermeiden, wird die Fronthaube nachgiebig gelagert. Die bei einem Kopfaufschlag auftretenden Kopfverzögerungen sollen dadurch einen zeitlichen Verlauf nehmen, der einen HIC-Wert <1000 aufweist. Der HIC-Wert ist eine Kenngröße, um die gerade noch ertragbare Belastung des menschlichen Kopfes zu beschreiben. Die genaue Definition dieses Wertes kann der Fachliteratur entnommen werden.

Die oben schon erwähnte Offenlegungsschrift schlägt vor, die Fronthaube mittels nachgiebiger, Energie verzehrender Bauelemente an der Fahrzeugkarosserie zu lagern, die zum Teil im Scharnier ausgebildet sind. Wie ein solches Element konkret gestaltet sein könnte, kann der Schrift aber nicht entnommen werden. Außerdem besteht das Problem, dem Element eine ausreichende Grundsteifigkeit zu geben, damit es bei üblichen statischen Belastungen nicht nachgibt, sondern nur bei einer stoßartigen Belastung, wie sie bei einem Körper- bzw. Kopfaufprall auftritt.

In der gattungsbildenden EP 1 104 728 sind einarmige Scharniere beschrieben, die einen in einem Bogen verlaufenden Klapphebel aufweisen, wobei das eine Ende des Klapphebels mit einer oberen, mit der Fronthaube verbundenen Strebe fest verbunden ist, wobei der sich an dieses Ende anschließende vordere Bogenabschnitt in etwa senkrecht zur Fronthaube verläuft und wobei das andere Ende des Klapphebels drehbar an der Karosserie gelagert ist.

Die WO 00/72101 zeigt eine bei stoßartiger Belastung nachgiebige Baueinheit, die im weitesten Sinn als Crashbox angesprochen werden kann. Im Konkreten handelt es sich aber um ein mit einem Langloch versehenes, flaches Blechstück zwischen einem Drehgelenk an einer mit der Motorhaube verbundenen Strebe und einer karosseriefesten Strebe. Das Blechstück besteht aus zwei Laschen, die das Langloch seitlich einschließen.

Die gezeigte Lasche dient nur ungenügend dem Fußgängerschutz, weil die Laschen bei Belastung zur Seite ausknicken und sich dabei einmal falten. Die dabei wirkenden Biegekräfte sind relativ klein bzw. fallen, je weiter die Faltung fortschreitet, von einem anfänglich hohen Wert rasch ab, so dass die Energieaufnahme insgesamt relativ gering ist. Was bedeutet, dass die Kopfaufschlagsgeschwindigkeit auf den maximalen Verformungsweg der Laschen nicht vollständig abgebaut werden kann, so dass der Kopf zum Schluss ruckartig verzögert wird.

Die Erfindung beruht somit auf dem Problem, bei einem Scharnier mit einem in einem Bogen verlaufenden Klapphebel das Bauteil so zu gestalten, dass es stabil genug ist, statischen Belastungen standzuhalten, aber nachgiebig genug, um stoßartigen, von einem auf die Motorhaube aufschlagenden Kopf ausgehenden Belastungen ausweichen zu können, so dass ein für den Kopf gerade noch erträgliches Kraftniveau herrscht.

Die Lösung dieses Problems besteht in einer Fahrzeugkarosserie gemäß dem Oberbegriff des Anspruchs 1, die dadurch gekennzeichnet ist, dass die Crashbox durch Schwächungen des Klapphebels im vorderen Bogenabschnitt gebildet ist.

Dies hat den Vorteil, dass kein zusätzlicher Bauraum benötigt wird, da lediglich ein bisher steif ausgeführter Abschnitt des Klapphebels eine neue zusätzliche Funktion erhält. Da der vordere Bogenabschnitt des Klapphebels in Aufschlagsrichtung verläuft, muss lediglich dafür gesorgt werden, dass dieser bei einem Aufschlag gestaucht wird, was durch eine Crashbox leicht erreicht werden kann.

Dabei wird die Crashbox durch Schwächungen des Klapphebels im vorderen Bogenabschnitt gebildet. Während bei einer zuvor beschriebenen Lösung die Stützwände über quer angeordnete Platten untereinander und mit dem Klapphebel verbunden werden müssen, was einen gewissen Aufwand bedeutet, lassen sich die Schwächungen am Klapphebel selbst vornehmen, was relativ einfach schon bei der Herstellung berücksichtigt werden kann. Auch hier besteht ein großer konstruktiver Spielraum, den Grad der Energieaufnahme einzustellen.

Besondere einfach zu realisieren sind im vorderen Bogenabschnitt verlaufende Sicken, die sich im Wesentlichen quer zum Bogenabschnitt erstrecken. Insbesondere wenn diese wechselseitig angeordnet werden, ergibt sich ein Ziehharmonikaeffekt beim Stauchen des Klapphebels, was mit einem relativ gleichmäßigen Kraftverlauf verbunden ist.

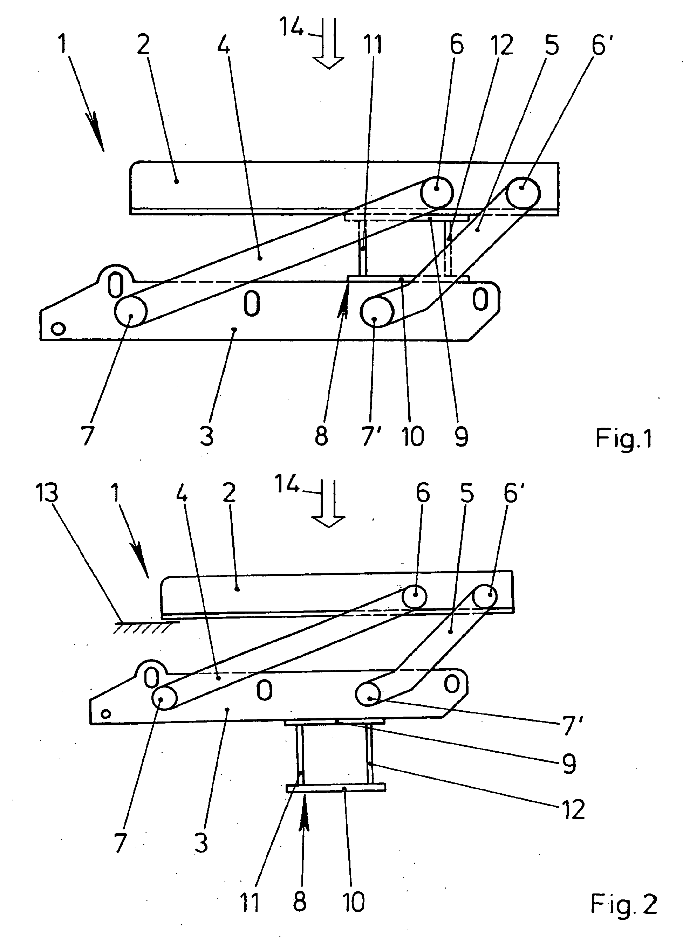

Im Folgenden soll die Erfindung anhand von vier Ausführungsbeispielen näher erläutert werden. Dazu zeigen
- Fig. 1: eine erste Ausführungsform, bei dem eine Crashbox im Scharnier angeordnet ist (nicht Gegenstand des Patents),
- Fig. 2: eine zweite Ausführungsform, bei der eine Crashbox unterhalb eines Scharniers liegt (nicht Gegenstand des Patents),

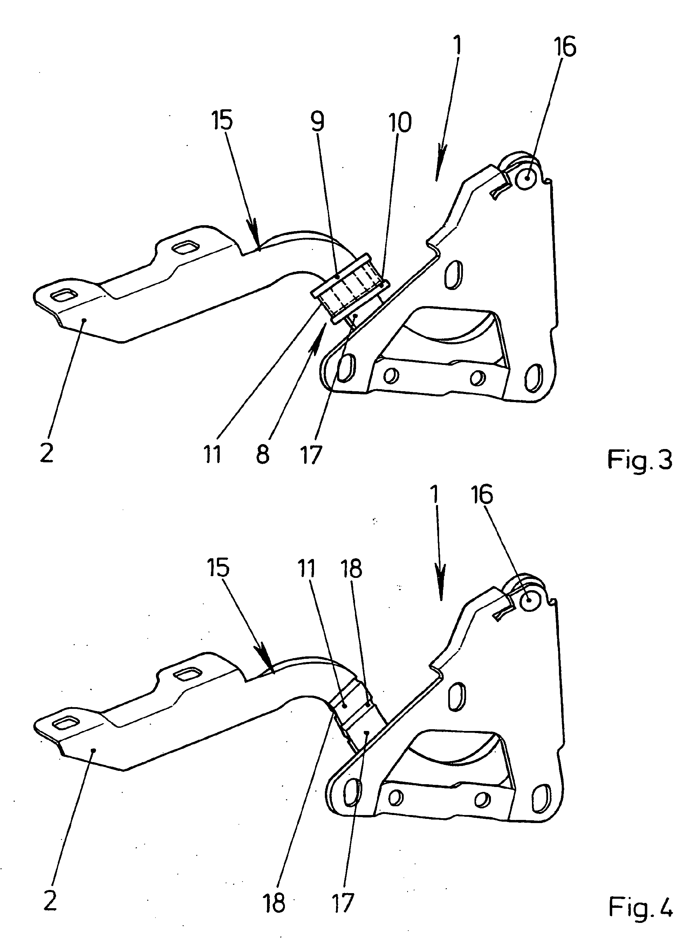

- Fig. 3: eine dritte Ausführungsform, bei der eine Crashbox Bestandteil eines Klapphebels des Scharniers ist (nicht Gegenstand des Patents),
- Fig. 4: eine dritte Ausführungsform, bei der die Crashbox durch Schwächung des Klapphebels erzielt ist.

Alle Figuren zeigen ein Scharnier 1 für eine Fronthaube, die hier nicht näher dargestellt ist. Das Scharnier 1 besteht aus einer oberen Strebe 2, die mit der Fronthaube verschweißt oder verschraubt ist, und einer unteren Strebe 3, die mit der Fahrzeugkarosserie verschraubt ist. Zwischen den beiden Streben 2, 3 erstrecken sich zwei Klapphebel 4, 5, die jeweils in Gelenken 6, 6', 7, 7' drehbar an den Streben 2, 3 gelagert sind. Damit beim Aufklappen die Fronthaube sich nach oben und nach vorne bewegt, um eine Kollision ihrer hinteren Kante mit einem die Fronthaube einfassenden Rahmen zu vermeiden, ist der eine Klapphebel 4 länger als der andere Klapphebel 5 und die Gelenke 6, 6' an der oberen Strebe 2 enger zusammen als die Gelenke 7, 7' an der unteren Strebe 3. Auf diese Weise erfährt die Schwenkachse der Fronthaube beim Aufklappen einen Versatz nach vorne.

## Patentansprüche

1. Fahrzeugkarosserie mit einer nachgiebig gelagerten Fronthaube, mit jeweils einem Scharnier (1) zwischen der Fahrzeugkarosserie und einem Seitenrand der Fronthaube, damit diese um eine von den Scharnieren (1) definierte Schwenkachse aufgeklappt werden kann, und mit mindestens einer unter Belastung nachgiebigen Baueinheit an jedem Seitenrand zum Lagern der Fronthaube an der Fahrzeugkarosserie, wobei die Baueinheit als eine stabile, aber sich plastisch verformende Crashbox (8) ausgebildet ist, die oberhalb einer bestimmten Belastung während einer stoßartigen Krafteinwirkung nachgibt, wobei jedes Scharnier (1) einen in einem Bogen verlaufenden Klapphebel (15) aufweist, wobei das eine Ende des Klapphebels (15) mit einer oberen Strebe (2) fest verbunden ist, wobei der sich daran anschließende vordere Bogenabschnitt (17) in etwa senkrecht zur Fronthaube verläuft und wobei das andere Ende des Klapphebels (15) drehbar an der Karosserie gelagert ist, **dadurch gekennzeichnet, dass** die Crashbox (8) durch Schwächungen des Klapphebels (15) im vorderen Bogenabschnitt (17) gebildet ist.

2. Fahrzeugkarosserie nach Anspruch 1, **dadurch gekennzeichnet, dass** die Schwächung von einer oder mehreren im vorderen Bogenabschnitt (17) verlaufenden Sicken (18) erreicht ist, wobei diese sich im Wesentlichen quer zum Bogenabschnitt (17) erstrecken.

## Claims

1. Vehicle body having a resiliently mounted front bonnet, having a hinge (1) between the vehicle body and each side edge of the front bonnet to allow the front bonnet to be folded up about a pivotal axis defined by the hinges (1), and having at least one constructional unit that yields under load disposed on each side edge for mounting the front bonnet on the vehicle body, wherein the constructional unit is configured as a stable but plastically deformable crash box (8), which yields above a specific load during an impact-like action of force, wherein each hinge (1) comprises a hinged lever (15) that extends in an arc, wherein the one end of the hinged lever (15) is connected in a fixed manner to an upper strut (2), wherein the front arc portion (17) adjacent thereto extends approximately perpendicularly to the front bonnet and wherein the other end of the hinged lever (15) is mounted rotatably on the body, **characterized in that** the crash box (8) is formed by weakened areas of the hinged lever (15) in the front arc portion (17).

2. Vehicle body according to claim 1, **characterized in that** the weakened area is achieved by one or more beads (18) extending in the front arc portion (17), wherein said beads extend substantially transversely of the arc portion (17).

## Revendications

1. Carrosserie de véhicule à capot avant monté pour être déformé, comprenant respectivement une charnière (1) entre la carrosserie de véhicule et un bord latéral du capot avant, afin que celui-ci puisse être ouvert par rabattement autour d'un axe de pivotement défini par les charnières (1), et avec au moins un module de structure déformable sous charge, sur chaque bord latéral, pour le montage en palier du capot avant sur la carrosserie de véhicule, le module de structure étant réalisé sous forme de boîtier d'écrasement en cas de collision ou « Crashbox » (8) stable mais se déformant plastiquement et qui, au-dessus d'une sollicitation déterminée, pendant la durée d'action d'une force ayant la nature d'un choc, se déforme, chaque charnière (1) présentant un levier de basculement (15) d'allure arquée, une extrémité du levier de basculement (15) étant reliée rigidement à une entretoise supérieure (2), le tronçon arqué (17) avant, s'y raccordant, s'étendant à peu près perpendiculairement au capot avant, et l'autre extrémité du levier de basculement (15) étant montée à rotation sur la carrosserie, **caractérisée en ce que** le boîtier d'écrasement en cas de collision (8) est formé par des affaiblissements du levier de basculement (15) réalisés dans le tronçon arqué (17) avant.

2. Carrosserie de véhicule selon la revendication 1, **caractérisée en ce que** l'affaiblissement est obtenu par une ou plusieurs moulures (18), s'étendant dans le tronçon arqué (17) avant, selon une orientation sensiblement transversale par rapport au tronçon arqué (17).
